**Europäisches Patentamt**

**European Patent Office**

**Office européen des brevets**

(19)

(11) Publication number : **0 427 430 B1**

(12) # EUROPEAN PATENT SPECIFICATION

(45) Date of publication of patent specification :
**19.05.93 Bulletin 93/20**

(51) Int. Cl.[5] : **A23K 1/16, A23K 1/18,
// A61K35/78**

(21) Application number : **90311719.0**

(22) Date of filing : **25.10.90**

(54) **Formula feed for reproduction promotion.**

(30) Priority : **08.11.89 JP 290689/89**

(43) Date of publication of application :
**15.05.91 Bulletin 91/20**

(45) Publication of the grant of the patent :
**19.05.93 Bulletin 93/20**

(84) Designated Contracting States :
**CH DE FR GB IT LI**

(56) References cited :
**EP-A- 0 222 169
EP-A- 0 251 018
GB-A- 2 184 334
DERWENT FILE SUPPLIER WPIL, 1984, acces-
sion no. 84-116621 [19], Derwent Publications
Ltd, London, GB; & JP-A-59 053 426 (WAKI-
NAGA PHARMACEUT.) 28-03-1984
DERWENT FILE SUPPLIER WPIL, 1990, acces-
sion no. 90-210242 [28], Derwent Publications
Ltd, London, GB; & CN-A-1 035 229 (WANG
YULIANG) 06-09-1989**

(73) Proprietor : **Nakayama, Hideo
International Yakukoshokuhinkaihatsu
Kabushikikaishanai, 868 Monzen-cho,
Hanayamachidori, Horikawa Nishiiru,
Shimogyo-ku
Kyoto-shi, Kyoto 600 (JP)**

(72) Inventor : **Nakayama, Hideo
International Yakukoshokuhinkaihatsu
Kabushikikaishanai, 868 Monzen-cho,
Hanayamachidori, Horikawa Nishiiru,
Shimogyo-ku
Kyoto-shi, Kyoto 600 (JP)**

(74) Representative : **Thomson, Paul Anthony et al
Potts, Kerr & Co. 15, Hamilton Square
Birkenhead Merseyside L41 6BR (GB)**

## Description

Formula feed for reproduction promotion

The present invention relates to a formula feed for reproduction promotion.

Much has been reported on the effects of chlorella on animals such as growth promotion, pregnancy rate increase, birth rate increase and male estrus promotion, including "Chlorella -Its fundamental and application-", Yoshiro Takechi, published by Gakushu Kenkyusha KK on November 11, 1971, pp. 210-211.

Taking note of the pregnancy rate increasing effect and male estrus promoting effect of chlorella described in these reports, the present inventor investigated a method of promoting animal reproduction by use of a chlorella-formulated feed. However, no satisfactory reproduction promoting effect could not be obtained simply by adding chlorella to feed.

Thus, with the aim of providing a formula feed for reproduction promotion with an improved reproduction promoting effect, the inventor made further investigations on various methods of treating chlorella to be added to and combinations with other formulas and then developed the present invention.

Accordingly, the object of the present invention is to provide a formula feed for reproduction promotion with an improved animal reproduction promoting effect.

To accomplish the object described above, the formula feed for reproduction promotion of the present invention comprises membrane-disrupted chlorella and the root of Acanthopanax senticosus Harms.

The formula feed for reproduction promotion of the present invention exhibits a marked promoting effect on the reproduction of the animal fed therewith. Its reproduction promoting effect is enhanced in relatively aged animals.

The chlorella used in the formula feed for reproduction promotion of the present invention is a single cell green alga belonging to the genus Chlorella, including Chlorella pyrenoidosa, Chlorella ellipsoidea, Chlorella vulgaris and Chlorella regularis.

Membrane-disrupted chlorella can, for example, be obtained by the method described in Japanese Patent Examined Publication No. 32351-1980 as follows:

An aqueous suspension of chlorella containing 10 to 25% by weight powdered chlorella is adjusted below 10°C. This suspension is fed to, and pulverized in, a continuous wet pulverizer as described below so that the slurry becomes below 40°C immediately after disruption. Then, the chlorella slurry thus obtained is immediately cooled below 10°C to yield membrane-disrupted chlorella without quality deterioration.

The above-mentioned pulverizer has a sealed cylinder equipped with cooling jacket wherein a large number of glass beads of 0.5 to 1.5 mm in diameter are contained. The volume of the glass beads is 80 to 85% of the capacity of the sealed cylinder, and the material in the inflow liquid is ground by mixing and rotating the glass beads with the inflow liquid.

Although the membrane-disrupted chlorella thus obtained can be used directly in feed, it may be used after an appropriate treatment such as vacuum drying followed by milling.

It is preferable that the root of Acanthopanax senticosus Harms be milled to reach a grain size appropriate from the viewpoint of digestion and absorption efficiency according to the subject animal species and other aspects by dry milling or another means before being added to feed.

There is no limitation on the content of membrane-disrupted chlorella and root of Acanthopanax senticosus Harms. However, a satisfactory effect can be obtained by adding membrane-disrupted chlorella and the root of Acanthopanax senticosus Harms to formula feed in rations of 1 to 10% by weight and 0.3 to 3% by weight, respectively.

The formula feed for reproduction promotion of the present invention may be supplemented as necessary with other components such as barley, wheat flour, corn, rice bran, fish meal, soybean cake, potato starch, powdered cod liver oil, sodium chloride, calcium carbonate, glucose and various vitamins.

Also, the formula feed for reproduction promotion of the present invention is used by feeding it to animals in the same manner as with ordinary formula feeds.

Example 1

```
Defatted rice bran      25.0 parts

(Here, "parts" means "parts by weight". The same  applies

below.)

Corn     20.0 parts

Soybean cake      15.7 parts

Wheat flour     15.7 parts

Fish meal      14.0 parts

Membrane-disrupted chlorella      5.0 parts

Dry powder of root of Acanthopanax senticosus Harms

    1.0 part

Wheat germ oil     3.0 parts

Calcium carbonate     0.5 parts

Sodium chloride     0.1 parts
```

Note that the membrane-disrupted chlorella used was obtained by pulverizing an aqueous suspension of chlorella containing 10 to 25% by weight powdered chlorella, adjusted below 10°C, in a continuous wet pulverizer which has a sealed cylinder with cooling jacket wherein a large number of glass beads of 0.5 to 1.5 mm in diameter, in a volume of 80 to 85% of the capacity of the sealed cylinder, are contained and which grinds the subject in the inflow liquid by mixing and rotating the glass beads with the inflow liquid, so that the slurry becomes below 40°C immediately after disruption, then immediately cooling the chlorella slurry thus obtained below 10°C, and milling it after vacuum drying. The same applies below.

Mice were fed with a formula feed of having the composition described above and water for 50 days.

The reared mice were ten young females, ten young males, ten aged females and ten aged males.

These mice were examined with respect to the following four items:

Spermatid count: After completion of the rearing period, a 1-$\mu\ell$ seminal plasma sample was collected from each male mouse using a fine catheter inserted via the reproductive organ opening. After appropriately diluting the sample, spermatids per unit volume were counted on a blood particle counter.

Frequency of vaginal plug formation: Frequency of vaginal plug formation during the rearing period was measured. Frequency of delivery: Frequency of delivery during the rearing period was measured.

Days required from initiation of mating to delivery: Days between initiation of mating and delivery of offsprings were counted.

The results are shown in Table 1 below, wherein data are expressed as mean value per animal and given separately for young mice and aged mice.

Example 2

```
Defatted rice bran      25.0    parts

Corn      20.0 parts

Soybean cake      15.7 parts

Wheat flour     15.7     parts

Fish meal      18.7 parts

Membrane-disrupted chlorella      1.0 part

Dry powder of root of Acanthopanax senticosus Harms

     0.3 part

Wheat germ oil      3.0 parts

Calcium carbonate      0.5 part

Sodium chloride      0.1 part
```

Mice were reared in the same manner as in Example 1 except that the formula feed described above was used, and the four items were examined in the same manner as in Example 1.

The results are shown in Table 1 below, wherein data are expressed as mean value per animal and given separately for young mice and aged mice.

Comparative Example 1

| | |
|---|---|
| Defatted rice bran | 25.0 parts |
| Corn | 20.0 parts |
| Soybean cake | 15.7 parts |
| Wheat flour | 15.7 parts |
| Fish meal | 20.0 parts |
| Wheat germ oil | 3.0 parts |
| Calcium carbonate | 0.5 part |
| Sodium chloride | 0.1 part |

Mice were reared in the same manner as in Example 1 except that the formula feed described above was used wherein the membrane-disrupted chlorella and dry powder of root of Acanthopanax senticosus Harms were replaced with fish meal, and the four items were examined in the same manner as in Example 1.

The results are shown in Table 1 below, wherein data are expressed as mean value per animal and given separately for young mice and aged mice.

Comparative Example 2

```
Defatted rice bran      25.0 parts

Corn      20.0 parts

Soybean cake      15.7 parts
```

4

```
Wheat flour        15.7 parts

Fish meal       15.0 parts

Membrane-disrupted chlorella       5.0 parts

Wheat germ oil       3.0 parts

Calcium carbonate       0.5 part

Sodium chloride       0.1 part
```

Mice were reared in the same manner as in Example 1 except that the formula feed described above was used wherein the root of Acanthopanax senticosus Harms was replaced with fish meal, and the four items were examined in the same manner as in Example 1.

The results are shown in Table 1 below, wherein data are expressed as mean value per animal and given separately for young mice and aged mice.

Comparative Example 3

```
Defatted rice bran        25.0 parts

Corn        20.0 parts

Soybean cake        15.7 parts

Wheat flour        15.7 parts

Fish meal        19.0 parts

Dry powder of root of Acanthopanax senticosus Harms

     1.0 part

Wheat germ oil        3.0 parts

Calcium carbonate        0.5 part

Sodium chloride        0.1 part
```

Mice were reared in the same manner as in Example 1 except that the formula feed described above was used wherein the membrane-disrupted chlorella was replaced with fish meal, and the four items were examined in the same manner as in Example 1.

The results are shown in Table 1 below, wherein data are expressed as mean value per animal and given separately for young mice and aged mice.

Comparative Example 4

Defatted rice bran       25.0 parts

Corn       20.0 parts

Soybean cake       15.7 parts

Wheat flour       15.7 parts

Fish meal       14.0 parts

Membrane-undisrupted chlorella       5.0 parts

Dry powder of root of Acanthopanax senticosus Harms

      1.0 part

Wheat germ oil       3.0 parts

Calcium carbonate       0.5 part

Sodium chloride       0.1 part

Mice were reared in the same manner as in Example 1 except that the formula feed described above was used wherein the membrane-disrupted chlorella was replaced with membrane-undisrupted chlorella, and the four items were examined in the same manner as in Example 1.

The results are shown in Table 1 below, wherein data are expressed as mean value per animal and given separately for young mice and aged mice.

Table 1

| | Spermatid count (10⁸cell/ml) | | Frequency of vaginal plug formation | | Frequency of delivery | | Days required from initiation of mating to delivery | |
|---|---|---|---|---|---|---|---|---|
| | Young | Aged | Young | Aged | Young | Aged | Young | Aged |
| Example 1 | 9.2 | 6.7 | 2.6 | 2.4 | 2.1 | 1.8 | 16.2 | 18.2 |
| Example 2 | 9.1 | 6.5 | 2.6 | 2.3 | 2.1 | 1.7 | 16.3 | 18.1 |
| Comparative Examples 1 | 7.9 | 3.8 | 2.2 | 0.7 | 1.8 | 0.6 | 19.1 | 30.2 |
| Comparative Examples 2 | 8.5 | 4.9 | 2.3 | 1.5 | 1.8 | 1.2 | 18.1 | 25.0 |
| Comparative Examples 3 | 8.2 | 4.4 | 2.3 | 0.9 | 1.8 | 0.8 | 18.7 | 29.4 |
| Comparative Examples 4 | 8.4 | 5.0 | 2.3 | 1.5 | 1.9 | 1.2 | 18.0 | 24.6 |

## Claims

1. A formula feed for reproduction promotion comprising membrane-disrupted chlorella and the root of Acanthopanax senticosus Harms.

2. A formula feed for reproduction promotion as claimed in claim 1 wherein said root of Acanthopanax senticosus Harms is in the dry powder form.

3. A formula feed for reproduction promotion as claimed in claim 2 comprising 1 to 10% by weight membrane-disrupted chlorella and 0.3 to 3% by weight dry powder of root of Acanthopanax senticosus Harms.

**Patentansprüche**

1. Fortpflanzungsfördernde Nährwert-Tabelle umfassend membranzerkleinerte Chlorellen und die Wurzel von Acanthopanax senticosus Harms.

2. Fortpflanzungsfördernde Nährwert-Tabelle nach Anspruch 1, wobei die Wurzel von Acanthopanax senticosus Harms in Form trockenen Pulvers vorgesehen ist.

3. Fortpflanzungsfördernde Närhwert-Tabelle nach Anspruch 2, umfassend 1 bis 10 Gew.-% membranzerkleinerter Chlorellen und 0,3 bis 3 Gew.-% trockenen Pulvers der Wurzel von Acanthopanax senticosus Harms.

**Revendications**

1. Aliment composé pour stimulation de la reproduction, comprenant de la Chlorella à membranes éclatées et de la racine d'Acanthopanax senticosus Harms

2. Aliment composé pour stimulation de la reproduction selon la revendication 1, dans lequel ladite racine d'Acanthopanax senticosus Harms est sous la forme de poudre sèche.

3. Aliment composé pour stimulation de la reproduction selon la revendication 2, comprenant de 1 à 10 % en poids de Chlorella à membranes éclatées et de 0,3 à 3 % en poids de racine d'Acanthopanax senticosus Harms.